# EUROPÄISCHE PATENTSCHRIFT

(11) **EP 3 034 865 B1**
(45) Veröffentlichungstag und Bekanntmachung des Hinweises auf die Patenterteilung: **22.02.2017**
(21) Anmeldenummer: 15197430.0
(22) Anmeldetag: 02.12.2015
(51) Int. Cl.: F03D 1/06

(54) **ANORDNUNG PULTRUDIERTER STÄBE**
ASSEMBLY OF PULTRUDED RODS
AGENCEMENT DE TIGES PULTRUDEES

(30) Priorität: 16.12.2014 DE 102014018498
(43) Veröffentlichungstag der Anmeldung: 22.06.2016
(73) Patentinhaber: Senvion GmbH, 22297 Hamburg (DE)
(72) Erfinder: RODAX, Benjamin, 33611 Bielefeld (DE)
(74) Vertreter: Seemann & Partner Patentanwälte mbB

(56) Entgegenhaltungen:
- WO-A1-03/008800
- WO-A1-2011/135306
- WO-A1-2013/087078
- DE-A1-102008 007 304

## Beschreibung

Die Erfindung betrifft eine Anordnung pultrudierter Stäbe aus einem faserverstärkten Material für einen Rotorblattgurt, wobei sich die pultrudierten Stäbe in einer Längsrichtung erstrecken und die pultrudierten Stäbe der Anordnung in einer Querrichtung, quer zu der Längsrichtung, nebeneinander angeordnet sind. Ferner betrifft die Erfindung einen Rotorblattgurt, umfassend eine solche Anordnung und ein Verfahren zum Herstellen eines Rotorblattgurtes.

Rotorblattgurte bestehen im Allgemeinen aus starken Strängen parallel ausgerichteter Fasern, zumeist Glasfasern oder Kohlefasern, die in eine Harzmatrix eingebettet sind. Ein Rotorblattgurt durchzieht das Rotorblatt üblicherweise von der Rotorblattspitze bis zur Rotorblattwurzel, so dass Kräfte, die auf das Rotorblatt einwirken, an die Rotorblattwurzel übertragen werden.

Rotorblattgurte werden vielfach in einer geschichteten Bauweise hergestellt. Beispielsweise werden trockene Fasergelege parallel ausgerichtet aufeinandergelegt und anschließend in einem Harzinfusionsverfahren vergossen. Ebenso ist es üblich, vorgefertigte Lagen von in Harz eingebetteten Fasermaterialien, sogenannten Prepregs, aufeinanderzulegen und anschließend miteinander zu verbinden. Das Aushärten des eingesetzten Harzes ist ein exothermer Prozess, bei dem Wärme über ein großes Volumen verteilt frei wird. Dies führt unter Umständen zu einer Wellenbildung im Fasermaterial, so dass dieses anschließend nicht mehr über die gesamte Gurtlänge ideal parallel ausgerichtet ist. Die auftretenden Wellen (Undulationen) beeinträchtigen unter Umständen die Druckfestigkeit und auch die Zugfestigkeit des hergestellten Rotorblattgurtes.

Zur Vermeidung dieses Phänomens ist es bekannt, anstelle von trockenen Glasfasergelegen oder Prepregs pultrudierte Stäbe aus faserverstärkten Materialien zur Herstellung der Rotorblattgurte zu verwenden. Pultrudierte Stäbe bestehen aus einem faserverstärkten Material, welches in einem Strangziehverfahren hergestellt wird. Durch das Strangziehen sind die in der Harzmatrix eingebetteten Glas- oder Kohlefasern nahezu ideal parallel zueinander ausgerichtet. Zur Herstellung des Rotorblattgurtes werden die pultrudierten Stäbe quer zu ihrer Längsrichtung dicht nebeneinander gelegt, so dass sich aus diesen Stäben der Aufbau des Rotorblattgurts ergibt. Ein anschließendes Verfügen mit Kunstharz führt bei den Stäben nicht mehr zu einer Wellenbildung.

Ausgehend von diesem Stand der Technik siehe z.B. WO 03/008800 oder WO2013/087078 ist es eine Aufgabe der vorliegenden Erfindung, eine Anordnung pultrudierter Stäbe, einen Rotorblattgurt sowie ein Verfahren zum Herstellen eines Rotorblattgurts anzugeben, welche/welches die Herstellung komplex geformter Rotorblattgurte ermöglicht.

Die Aufgabe wird gelöst durch eine Anordnung pultrudierter Stäbe aus einem faserverstärkten Material für einen Rotorblattgurt, wobei sich die pultrudierten Stäbe in einer Längsrichtung erstrecken und die pultrudierten Stäbe der Anordnung in einer Querrichtung, quer zu der Längsrichtung, nebeneinander angeordnet sind, wobei die Anordnung dadurch fortgebildet ist, dass sie zumindest ein aus einem Fasermaterial hergestelltes flexibles Haltemittel umfasst, welches unmittelbar nebeneinander angeordnete Stäbe derart miteinander verbindet, so dass eine relative Verschiebung der benachbarten Stäbe zueinander in Querrichtung begrenzt ist, wobei das flexible Haltemittel ferner derart eingerichtet ist, so dass die unmittelbar benachbarten Stäbe in Längsrichtung gegeneinander abgleiten können.

Insbesondere ist vorgesehen, dass die unmittelbar benachbarten Stäbe in Längsrichtung frei gegeneinander abgleiten können. Unter einem "freien" Abgleiten der benachbarten Stäbe wird im Kontext der vorliegenden Beschreibung verstanden, dass das flexible Haltemittel derart eingerichtet ist, dass dieses zwar in Querrichtung, nicht jedoch in Längsrichtung eine haltende Kraft auf die Stäbe ausübt. Insofern ist es einander benachbarten Stäben möglich, mit geringem mechanischen Widerstand, welcher lediglich durch die Haft- und Gleitreibung der Stäbe untereinander bzw. zu dem Haltemittel bestimmt ist, in Längsrichtung abzugleiten.

Bei der Herstellung von Rotorblattgurten oder Holmgurten aus pultrudierten faserverstärkten Stäben, beispielsweise aus Glasoder Kohlefaserhalbzeugen, sollen die einzelnen Stäbe möglichst parallel zueinander in Längsrichtung des Gurtes verlaufen. Gleichzeitig soll die aus den Stäben gebildete Lage möglichst gut der Form einer Oberfläche des Rotorblattgurtes folgen. Die Oberflächen moderner Rotorblätter sind oftmals mehrfach gekrümmte Flächen.

Unter einer mehrfach gekrümmten Fläche wird in dem Kontext der vorliegenden Beschreibung eine Fläche verstanden, welche in mehrere nicht identische Richtungen eine Krümmung aufweist. Insbesondere sind die Krümmungen unterschiedlich groß.

Rotorblattgurte solcher Rotorblätter weisen ebenfalls zumindest eine mehrfach gekrümmte Oberfläche auf. Die zur Herstellung verwendeten parallel zueinander ausgerichteten Stäbe sollen nach Möglichkeit dieser gekrümmten Oberfläche folgen. Abhängig davon in welchem Bereich der Krümmung die jeweiligen Stäbe verlaufen, müssen diese unterschiedlichen Krümmungsradien folgen. Dies bedeutet, dass in einem Abschnitt des Rotorblattgurts mit einer bestimmten Länge in Längsrichtung des Rotorblattgurts die einzelnen Stäbe unterschiedlich großen Wegstrecken folgen. Beispielsweise wird in einem flachen Bereich geringer Krümmung ein kürzerer Stab als in einem Bereich starker Krümmung benötigt.

Die Erfindung beruht auf der Erkenntnis, dass zum notwendigen Ausgleich der Längenunterschiede zwischen parallelen Stäben ein Abgleiten der einzelnen Stäbe relativ zueinander erforderlich ist, so dass diese der mehrfach gekrümmten Oberfläche folgen können. Die erfindungsgemäße Anordnung pultrudierter Stäbe umfasst daher ein aus einem Fasermaterial hergestelltes flexibles Haltemittel, welches diese Relativbewegung der einzelnen Stäbe ermöglicht.

Unter dem Begriff "flexibel" wird im Kontext der vorliegenden Beschreibung eine mechanische Flexibilität oder Biegbarkeit verstanden. Das flexible Haltemittel ist insbesondere weicher als die Stäbe und auch im Vergleich leichter biegbar. Es begrenzt die Bewegungsfreiheit der faserverstärkten Stäbe in Querrichtung, erlaubt jedoch ein Abgleiten in Längsrichtung.

Werden die Glas- bzw. Kohlefaserhalbzeuge, d.h. die pultrudierten Stäbe, in die zur Herstellung des Rotorblattgurts verwendete Laminierform eingelegt, ist es ohne weiteres möglich, diese an die insbesondere mehrfach gekrümmte Oberfläche der Laminierform anzupassen. Gleichzeitig ist sichergestellt, dass die einzelnen Stäbe möglichst parallel zueinander ausgerichtet sind und der Abstand zwischen benachbarten Stäben ein vorbestimmtes Maximum nicht überschreitet. Mithilfe der erfindungsgemäßen Anordnung ist es möglich, komplex geformte Rotorblattgurte in hoher Qualität effizient zu fertigen.

Gemäß einer Ausführungsform ist die Anordnung pultrudierter Stäbe dadurch fortgebildet, dass das Haltemittel zumindest einen in Querrichtung verlaufenden Faden oder zumindest ein in Querrichtung verlaufendes Band umfasst, wobei der Faden oder das Band eine Vielzahl geschlossener Schlaufen ausbildet und wobei sich die Stäbe in Längsrichtung durch die Schlaufen hindurch erstrecken.

Unter einem "Faden" wird im Kontext der vorliegenden Beschreibung nicht nur ein geflochtener oder geschlagener Faden, sondern ebenso ein Faserbündel oder eine andere Zusammensetzung, wie beispielsweise ein dünnes Bündel aus Vliesmaterial verstanden. Gleiches trifft selbstverständlich auf ein "Band" zu.

Ferner ist die erfindungsgemäße Anordnung insbesondere dadurch fortgebildet, dass das Haltemittel zumindest zwei in Querrichtung verlaufende Fäden oder zumindest zwei in Querrichtung verlaufende Bänder umfasst, wobei die beiden Fäden oder Bänder entgegengesetzt und abwechselnd nach der Art von Kettfäden auf einer ersten Flachseite und einer dieser gegenüberliegenden zweiten Flachseite der Stäbe verlaufen und in einem Zwischenraum zwischen den Stäben, der von einander zugewandten Flachseiten unmittelbar benachbarter Stabe begrenzt wird, Kreuzungspunkte ausbilden.

Die pultrudierten Stäbe sind näherungsweise quaderförmig, weisen also drei Paare zueinander paralleler Flachseiten auf. Die größten Oberflächen sollen als große Flachseiten bezeichnet werden. Die kleinsten Oberflächen sind die Stirnseiten. Angrenzend an die großen Flachseiten und an die Stirnseiten erstrecken sich die Oberflächen mittlerer Größe, welche als kleine Flachseiten bezeichnet werden. Insbesondere verlaufen die Fäden oder Bänder in Querrichtung entgegengesetzt und abwechselnd nach der Art von Kettfäden auf einer ersten großen Flachseite und einer dieser gegenüberliegenden zweiten großen Flachseite der Stäbe und bilden in einem von einander zugewandten kleinen Flachseiten begrenzten Zwischenraum zwischen den Stäben Kreuzungspunkte aus. Ebenso ist es möglich, dass die Fäden oder Bänder entlang der kleinen Flachseiten verlaufen und in einem Zwischenraum Kreuzungspunkte ausbilden, der von den großen Flachseiten begrenzt ist. In einer solchen Anordnung sind die Stäbe hochkant angeordnet.

Es ist ferner insbesondere vorgesehen, dass die pultrudierten Stäbe im Querschnitt mehreckig sind, wobei nicht notwendigerweise ein quaderförmiger oder quadratischer Querschnitt vorliegt. Beispielsweise sind die pultrudierten Stäbe gemäß weiterer Ausführungsbeispiele im Querschnitt sechseckig oder achteckig. Solche Stäbe werden mit ihren Flachseiten aneinandergrenzend angeordnet. Ferner ist bei Stäben mit einem vieleckigen Querschnitt, insbesondere bei solchen mit einer geraden Anzahl von Flachseiten, vorgesehen, dass deren Flachseiten parallel zur großen Flachseite des herzustellenden Rotorblattgurts orientiert ist. Bevorzugt sind die pultrudierten Stäbe derart angeordnet, dass eine Stoßkante zwischen einander benachbarten Flachseiten in Richtung der großen Flachseiten des Rotorblattgurts weist. Im Querschnitt betrachtet stehen die Vielecke, beispielsweise Sechs- oder Achtecke, "auf der Spitze". Bei einer solchen Anordnung grenzen in der Ebene des Rotorblattgurts die Flachseiten der Stäbe aneinander. Vorteilhaft wird so eine dichte Packung der pultrudierten Stäbe realisiert. Der Verlauf der Haltemittel ist ebenso vorgesehen, wie oben im Hinblick auf die beispielsweise quaderförmigen pultrudierten Stäbe beschrieben.

Insbesondere ist in jeder Halteschlaufe ein Stab vorhanden. Ferner umfasst die Anordnung insbesondere mehrere Haltemittel, wobei die Haltemittel in Längsrichtung untereinander beabstandet sind. Das bzw. die Haltemittel erstreckt/erstrecken sich ferner insbesondere senkrecht, d.h. orthogonal, zur Längsrichtung der Anordnung pultrudierter Stäbe.

Vorteilhaft wird die Möglichkeit geschaffen, die pultrudierten Stäbe ähnlich einem Gelege in eine Form zur Herstellung des Rotorblattgurts einzulegen. Die Fäden oder Bänder begrenzen die Bewegungsfreiheit der Stäbe in Querrichtung. Auch bei Anpassung der Anordnung an eine gekrümmte Oberfläche der Laminierform bleiben die Stäbe nahezu parallel zueinander angeordnet. Auch während des anschließenden Fixierens der Stäbe, beispielsweise unter Verwendung eines Kunstharzes, bleiben die Stäbe parallel zueinander angeordnet. Die Verbindung direkt benachbarter pultrudierter Stäbe ist jedoch andererseits so flexibel, dass die benachbarten Stäbe gegeneinander abgleiten können. Die Schar nahezu paralleler Stäbe kann an die Geometrie der Laminierform angepasst werden.

Ein Abgleiten benachbarter Stäbe erfolgt einerseits, indem die Stäbe in den Schlaufen der Haltemittel gleiten und andererseits, indem sich das flexible Haltemittel in einem Bereich zwischen den einzelnen Stäben mehr oder weniger stark bewegt bzw. verbiegt.

Gemäß einer weiteren Ausführungsform ist die Anordnung pultrudierter Stäbe dadurch fortgebildet, dass das Haltemittel eine Vielzahl länglicher Taschen umfasst, welche sich in Längsrichtung erstrecken und welche insbesondere aneinander in Längsrichtung entgegengesetzten Enden offen sind, wobei in Querrichtung unmittelbar benachbarte Taschen miteinander verbunden sind. Insbesondere sind die Taschen entlang einer in Längsrichtung zwischen den Stäben verlaufenden Naht miteinander verbunden. Ähnlich wie die Kreuzungspunkte befindet sich diese Naht in einem Zwischenraum zwischen den Stäben, der von den einander zugewandten kleinen oder großen Flachseiten unmittelbar benachbarter Stäbe begrenzt wird.

Insbesondere sind die Taschen durchlässig für Harz.

Die Halterung der Stäbe in Taschen, wobei insbesondere ein Stab pro Tasche vorgesehen ist, erlaubt vorteilhaft ein ungehindertes Abgleiten benachbarter Stäbe. Diese verschieben sich bzw. verrutschen in den Taschen. Da die Taschen in einem großen Kontaktbereich an den Seitenflächen der Stäbe anliegen, werden diese sich nicht verhaken. Gleichzeitig ist sichergestellt, dass über die gesamte Länge der Stäbe ein durch die Dimension der Taschen vorgegebener maximaler Abstand in Querrichtung nicht überschritten wird. Mit anderen Worten sind die Stäbe in den Taschen so geführt, dass Ausbuchtungen der Stäbe in Querrichtung nicht auftreten können. Die Stäbe sind in den Taschen des Haltemittels also definiert und zuverlässig geführt.

Insbesondere sind unmittelbar benachbarte Taschen des Haltemittels entlang ihrer vollständigen Länge miteinander verbunden. Gemäß einer vorteilhaften Ausführungsform ist die Anordnung ferner dadurch fortgebildet, dass das Haltemittel aus einem gewebten und/oder geflochtenen Material hergestellt ist, welches insbesondere aus Kohlefaser und/oder Glasfaser hergestellt ist.

Insbesondere ist als Material für das Haltemittel das gleiche Fasermaterial vorgesehen, wie es zur Herstellung der pultrudierten Stäbe verwendet wird. Die Verwendung des gleichen Materials ist besonders vorteilhaft, da das Haltemittel gemeinsam mit den Stäben fixiert wird. Werden die Stäbe und das Haltemittel beispielsweise mit einem Kunstharz vergossen so kann dieses Material optimal auf das Fasermaterial der Stäbe bzw. des Haltemittels abgestimmt werden.

Die erfindungsgemäße Aufgabe wird ferner gelöst durch einen Rotorblattgurt eines Rotorblatts einer Windenergieanlage, wobei der Rotorblattgurt zumindest eine Lage pultrudierter Stäbe aus einem faserverstärkten Material umfasst, wobei der Rotorblattgurt dadurch fortgebildet ist, dass die Lage pultrudierter Stäbe zumindest teilweise in einer Anordnung nach einer oder mehreren genannten Ausführungsform(en) angeordnet ist.

Insbesondere ist vorgesehen, dass die Lage pultrudierter Stäbe vollständig von der Anordnung gemäß einer oder mehreren genannten Ausführungsform(en) gebildet ist. Es sind Rotorblattgurte vorgesehen, welche eine oder mehrere Lagen pultrudierter Stäbe umfasst. Mit anderen Worten umfasst der Rotorblattgurt insbesondere eine Anordnung oder mehrere Anordnungen gemäß einer oder mehreren genannten Ausführungsform(en).

Der erfindungsgemäße Rotorblattgurt ist insbesondere dadurch fortgebildet, dass eine Flachseite, insbesondere eine große Flachseite, des Rotorblattgurtes eine mehrfach gekrümmte Oberfläche ist und die Stäbe der Anordnung in einer Ebene verlaufen, die dieser mehrfach gekrümmten Oberfläche folgt.

Zur Herstellung eines Rotorblattgurts, dessen pultrudierte Stäbe einer komplexen Geometrie folgen sollen, ist es erforderlich, dass die einzelnen Stäbe untereinander abgleiten können, wenn die Anordnung in die Laminierform zur Herstellung des Rotorblattgurts eingelegt wird. Der Rotorblattgurt ist mithilfe der erfindungsgemäßen Anordnung einfach, effektiv und in hoher Qualität herstellbar.

Ferner treffen auf den Rotorblattgurt gleiche oder ähnliche Vorteile zu, wie sie bereits im Hinblick auf die Anordnung pultrudierter Stäbe erwähnt wurden. Sie sollen an dieser Stelle nicht wiederholt werden.

Die erfindungsgemäße Aufgabe wird gelöst durch ein Verfahren zum Herstellen eines Rotorblattgurtes eines Rotorblatts einer Windenergieanlage, welches dadurch fortgebildet ist, dass zumindest eine Lage pultrudierter Stäbe in einer Anordnung nach einer oder mehreren der genannten Ausführungsformen in eine Laminierform zum Herstellen des Rotorblattgurtes eingelegt wird bzw. werden und anschließend die pultrudierten Stäbe miteinander verbunden, insbesondere vergossen, werden.

Das erfindungsgemäße Verfahren ist insbesondere dadurch fortgebildet, dass eine Innenkontur der Laminierform, welche dazu dient eine Flachseite, insbesondere eine große Flachseite, die der Blattschale zugewandt ist, des Rotorblattgurts zu formen, eine mehrfach gekrümmte Oberfläche ist, und die Anordnung pultrudierter Stäbe dieser Innenkontur folgend in die Laminierform eingelegt wird, so dass ein Rotorblattgurt mit einer mehrfach gekrümmten Flachseite herstellbar ist und die Anordnung pultrudierter Stäbe in einer Ebene verläuft, welche der mehrfach gekrümmten Oberfläche folgt.

Auch auf das Verfahren zum Herstellen eines Rotorblattgurtes treffen gleiche oder ähnliche Vorteile zu, wie sie bereits im Hinblick auf den Rotorblattgurt bzw. auf die Anordnung pultrudierter Stäbe erwähnt wurden, so dass auf eine Wiederholung verzichtet wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Anordnung pultrudierter Stäbe in perspektivischer Ansicht,
- Fig. 2: eine schematische Anordnung pultrudierter Stäbe in einer Querschnittsansicht,
- Fig. 3: eine weitere schematische Anordnung pultrudierter Stäbe in perspektivischer Ansicht,
- Fig. 4: ein schematisches Rotorblatt mit einem Rotorblattgurt in Draufsicht und
- Fig. 5: eine schematische Querschnittsansicht eines Rotorblattgurtes.

In den Zeichnungen sind jeweils gleiche oder gleichartige Elemente und/oder Teile mit denselben Bezugsziffern versehen, so dass von einer erneuten Vorstellung jeweils abgesehen wird.

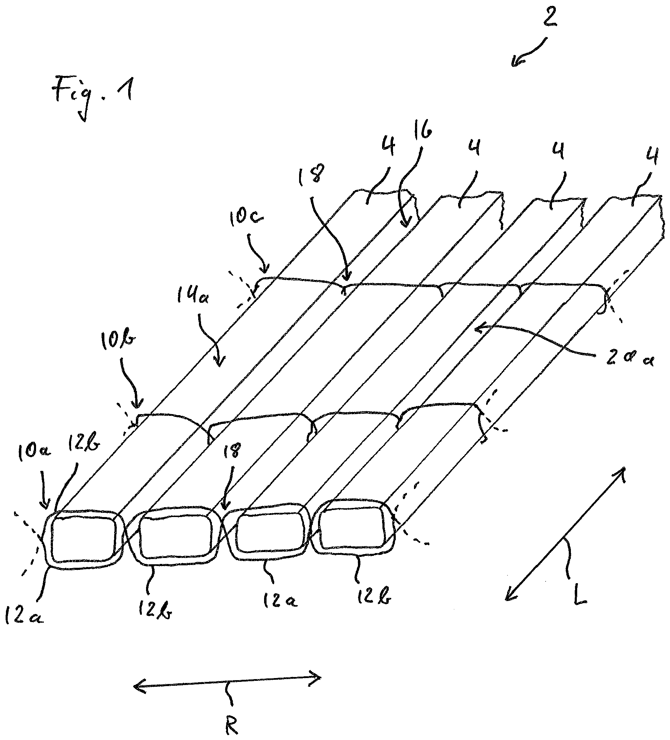

Fig. 1 zeigt in schematischer perspektivischer Ansicht eine Anordnung 2 pultrudierter Stäbe 4 aus einem faserverstärkten Material. Beispielsweise handelt es sich um Stäbe 4, welche mit Glas- oder Kohlefasern verstärkt sind. Lediglich aus Gründen der Übersichtlichkeit ist eine relativ geringe Anzahl pultrudierter Stäbe 4 dargestellt. Die Anordnung 2 pultrudierter Stäbe 4 umfasst ebenso eine weit größere Anzahl pultrudierter Stäbe 4.

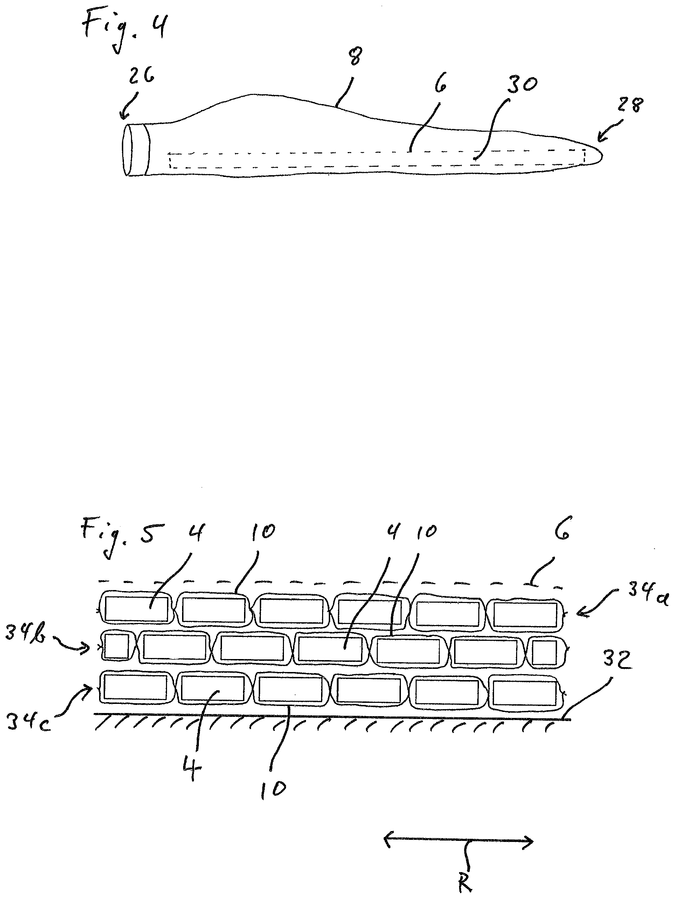

Die Anordnung 2 pultrudierter Stäbe 4 dient der Herstellung eines Rotorblattgurts 6 eines Rotorblatts 8 einer Windenergieanlage (vgl. Fig. 4).

Die pultrudierten Stäbe 4 erstrecken sich in eine Längsrichtung L. Quer zu der Längsrichtung L, insbesondere senkrecht bzw. orthogonal zu dieser Längsrichtung L, erstreckt sich eine Querrichtung R der Anordnung 2. Die Stäbe 4 der Anordnung 2 sind in Querrichtung R nebeneinander angeordnet.

Die Anordnung 2 umfasst ferner ein aus einem Fasermaterial hergestelltes flexibles Haltemittel 10. Gemäß dem in Fig. 1 dargestellten Ausführungsbeispiel umfasst die Anordnung 2 mehrere Haltemittel 10, nämlich beispielhaft das erste bis dritte Haltemittel 10a, 10b und 10c. Die Haltemittel 10a, 10b, 10c bestehen jeweils aus einem ersten und einem zweiten in Querrichtung R verlaufenden Faden 12a, 12b, wobei die beiden Fäden 12a, 12b entgegengesetzt und abwechselnd nach der Art von Kettfäden entlang einer ersten großen Flachseite 14a und einer gegenüberliegenden zweiten großen Flachseite 14b der Stäbe 4 verlaufen. Die Haltemittel 10a, 10b, 10c sind untereinander in Längsrichtung L beabstandet. Aus Gründen der Übersichtlichkeit sind in Fig. 1 lediglich die Fäden 12a, 12b des ersten Haltemittels 10a mit Bezugszeichen versehen. Ferner ist lediglich die große Flachseite 14a eines Stabs 4 mit einem Bezugszeichen versehen.

Bei den Fäden 12a, 12b handelt es sich beispielsweise um geflochtene oder geschlagene Fäden. Ebenso ist vorgesehen, dass es sich um Faserbündel oder um ein dünnes Bündel aus Vliesmaterial handelt. Unter dem Begriff "Faden" ist stets auch ein solches Material zu verstehen.

In einem Zwischenraum 16 zwischen unmittelbar benachbarten Stäben 4 befinden sich Kreuzungspunkte 18 der Fäden 12a, 12b. Der Zwischenraum 16 ist von den einander zugewandten kleinen Flachseiten 20a, 20b der Stäbe 4 begrenzt.

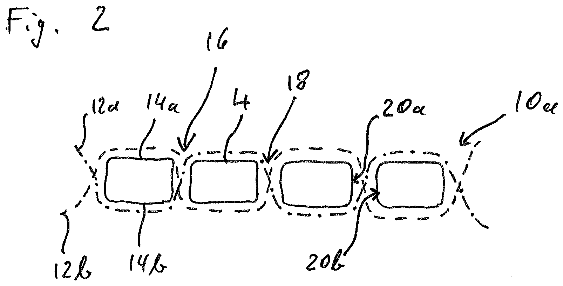

Die schematische Querschnittsansicht in Fig. 2 zeigt den Verlauf des ersten und zweiten Fadens 12a, 12b, wobei der erste Faden 12a in strichpunktierter Linie und der zweite Faden 12b in gestrichelter Linie dargestellt ist. Der erste und der zweite Faden 12a, 12b verlaufen nach der Art von Kettfäden, wie sie aus der Weberei bekannt sind. Sie erstrecken sich abwechselnd oberhalb und unterhalb der Stäbe 4.

So bildet das jeweilige Haltemittel 10a, 10b, 10c eine Vielzahl geschlossener Schlaufen aus, welche jeweils von dem ersten Faden 12a und dem zweiten Faden 12b begrenzt sind. Die Stäbe 4 erstrecken sich in Längsrichtung L jeweils durch eine dieser Schlaufen hindurch. Es ist ebenso möglich, dass mehrere Stäbe 4 pro Schlaufe vorgesehen sind.

Alternativ zu den dargestellten Fäden 12a, 12b ist es ferner möglich, Bänder oder dergleichen zu verwenden. Diese werden in gleicher Weise wie die Fäden 12a, 12b geführt. Es können geflochtene oder geschlagene Fäden bzw. Bänder verwendet werden.

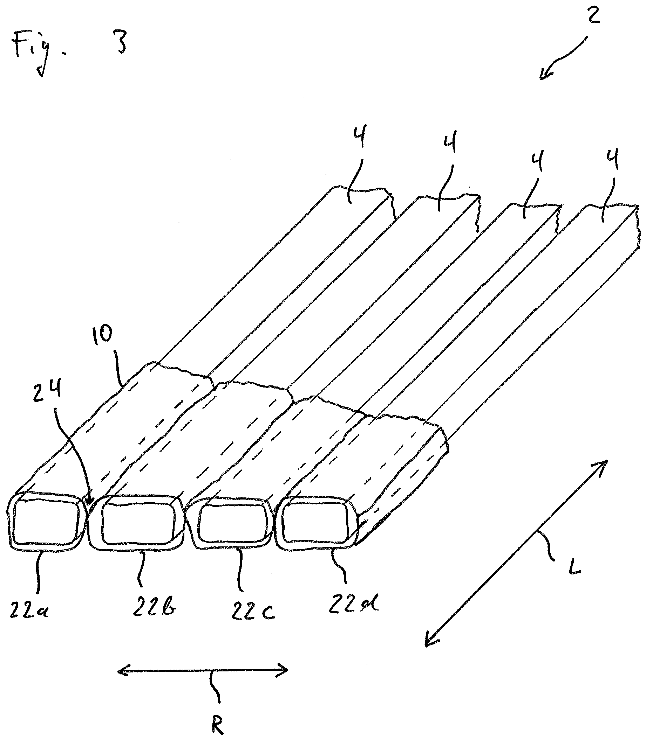

Fig. 3 zeigt in einer weiteren schematischen Perspektivansicht ein weiteres Ausführungsbeispiel für eine Anordnung 2 pultrudierter Stäbe 4. Das Haltemittel 10 umfasst eine Vielzahl länglicher Taschen 22a, 22b, 22c, 22d, die sich in Längsrichtung L erstrecken. Die Taschen 22a ... 22d sind an ihren einander in Längsrichtung L entgegengesetzten Enden offen. Es ist ebenso möglich, einseitig geschlossene Taschen 22a ... 22d vorzusehen. In Querrichtung R sind unmittelbar benachbarte Taschen 22a ... 22d miteinander verbunden.

Gemäß dem in Fig. 3 dargestellten Ausführungsbeispiel sind die Taschen 22 a ... 22d entlang einer in Längsrichtung L zwischen den Stäben 4 verlaufenden Naht 24 miteinander verbunden, beispielsweise miteinander verschweißt oder vernäht. Insbesondere verläuft diese Naht 24 entlang der vollständigen Länge der Taschen 22a ... 22b in Längsrichtung L.

Sowohl in Fig. 1 als auch in Fig. 3 sind aus Gründen der Übersichtlichkeit die Stäbe 4 abschnittsweise in einem Bereich am Ende der Anordnung 2 dargestellt. Gleiches gilt für das entsprechende Haltemittel 10 in Fig. 3.

Die Stäbe 4 sind pultrudierte Stäbe aus einem faserverstärkten Material, beispielsweise aus Glas- oder Kohlefaser. Das Haltemittel 10, 10a, 10b, 10c ist ebenfalls bevorzugt aus Glas- oder Kohlefaser hergestellt. Zur Herstellung des Haltemittels 10 wird ein gewebtes und/oder geflochtenes Material verwendet. Dies gilt sowohl für die Fäden 12a, 12b als auch für die Taschen 22a ... 22d bzw. das Material, aus dem diese hergestellt sind.

Die Anordnung 2 pultrudierter Stäbe 4 dient der Herstellung eines Rotorblattgurts 6, wie er schematisch in Fig. 4 angedeutet ist. Die Abbildung zeigt ein Rotorblatt 8 in Draufsicht, wobei der innenliegende Rotorblattgurt 6 in gestrichelter Linie angedeutet ist. Der Rotorblattgurt 6 erstreckt sich im Wesentlichen von der Blattwurzel 26 bis zur Blattspitze 28 des Rotorblatts 8.

Rotorblätter 8 moderner Windenergieanlagen weisen in vielen Fällen mehrfach gekrümmte Oberflächen auf, so dass auch der Rotorblattgurt 6 bzw. eine Oberfläche des Rotorblattgurts 6 dieser komplex geformten geometrischen Oberfläche folgen muss.

Um in einer Lage pultrudierter Stäbe 4 eine solche insbesondere mehrfach gekrümmte Ebene abzubilden, ist es notwendig, dass die einzelnen Stäbe 4 der Anordnung 2, insbesondere direkt benachbarte Stäbe 4 der Anordnung 2 in Längsrichtung L gegeneinander abgleiten.

Die unmittelbar nebeneinander angeordneten Stäbe 4 werden durch das Haltemittel 10, 10a, 10b, 10c jedoch gleichzeitig so miteinander verbunden, dass eine relative Verschiebung benachbarter Stäbe 4 zueinander in Querrichtung R begrenzt ist. Mit anderen Worten wird ein maximaler Abstand, den benachbarte Stäbe 4 in Querrichtung R relativ zueinander einnehmen festgelegt.

Die flexiblen Haltemittel 10, 10a, 10b, 10c sind derart eingerichtet, dass die unmittelbar benachbarten Stäbe 4 in Längsrichtung L frei gegeneinander abgleiten können. Mit anderen Worten gleiten die benachbarten Stäbe 4 in Längsrichtung L mit geringem Reibungswiderstand gegeneinander ab. Dieser Reibungswiderstand ist lediglich durch die Haft- bzw. Gleitreibung der benachbarten Stäbe 4 untereinander bzw. zu dem flexiblen Haltemittel 10, 10a, 10b, 10c bestimmt. Ein solches Abgleiten mit geringem Reibungswiderstand wird im Kontext der vorliegenden Beschreibung als "freies" Abgleiten bezeichnet.

Ein solches Abgleiten erfolgt, indem die Stäbe 4 in den Schlaufen, welche durch die Fäden 12a, 12b gebildet sind oder in den Taschen 22a ... 22d in Längsrichtung L gleiten. Die Dimension der Taschen 22a ... 22d bzw. der von den Fäden 12a, 12b gebildeten Schlaufen begrenzt die Bewegungsfreiheit der Stäbe 4 in Querrichtung R. Somit sorgen die Haltemittel 10, 10a, 10b, 10c dafür, dass die Stäbe 4 alle im Wesentlichen parallel zueinander orientiert sind. Mit anderen Worten ist eine Längserstreckungsrichtung der pultrudierten Stäbe 4 stets im Wesentlichen gleich der Längsrichtung L der Anordnung 2.

Mithilfe der Anordnung 2 pultrudierter Stäbe 4 ist es möglich, einen Rotorblattgurt 6 herzustellen, dessen Flachseite, insbesondere dessen eine große Flachseite 30, eine mehrfach gekrümmte Oberfläche 32 ist. Die pultrudierten Stäbe 4 der Anordnung 2 verlaufen bei einem solchen Rotorblattgurt 6 in einer Ebene, die dieser mehrfach gekrümmten Oberfläche 32 folgt.

Zum Herstellen eines solchen Rotorblattgurtes 6 wird zumindest eine Lage pultrudierter Stäbe 4 umfassend eine Anordnung 2 in eine Laminierform für einen Rotorblattgurt 6 eingelegt. Anschließend werden die pultrudierten Stäbe 4 miteinander verbunden, insbesondere vergossen, weiterhin insbesondere mit Kunstharz vergossen. Hierzu ist beispielsweise ein Harzinfusionsverfahren geeignet.

Eine Innenkontur einer solchen Laminierform, welche dazu dient, eine große Flachseite 30 eines Rotorblattgurtes 6 zu formen, weist eine mehrfach gekrümmte Oberfläche 32 auf.

Fig. 5 zeigt schematisch einen Abschnitt einer solchen Laminierform, wobei eine mehrfach gekrümmte Oberfläche 32 der Laminierform in Querschnitt dargestellt ist. Lediglich zur Vereinfachung der Darstellung soll diese mehrfach gekrümmte Oberfläche 32 senkrecht zu der Zeichenebene gekrümmt sein, so dass ihre Krümmung in Fig. 5 nicht sichtbar ist.

Der Rotorblattgurt 6 umfasst mehrere Lagen 34a, 34b, 34c pultrudierter Stäbe 4, welche lagenweise mit einem Haltemittel 10 zusammengehalten sind. Es ist vorgesehen, dass zumindest einige der pultrudierten Stäbe 4 mittels eines Haltemittels 10 zusammengehalten werden. Insbesondere sind alle Stäbe 4 einer Lage 34a, 34b, 34c mit einem Haltemittel 10 untereinander verbunden. Die Stäbe 4 sind von dem jeweiligen Haltemittel 10 in Querrichtung R in ihrer Bewegungsfreiheit eingeschränkt, während sie in einer Längsrichtung L, welche senkrecht zur Zeichenebene liegt, in den Schlaufen bzw. Taschen 22a ... 22d, welche von dem Haltemittel 10 gebildet werden, abgleiten.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Anordnung
- 4: Stäbe
- 6: Rotorblattgurt
- 8: Rotorblatt
- 10, 10a, 10b, 10c: Haltemittel
- 12a, 12b: Fäden
- 14a, 14b: große Flachseite
- 16: Zwischenraum
- 18: Kreuzungspunkt
- 20a, 20b: kleine Flachseite
- 22a .. 22d: Taschen
- 24: Naht
- 26: Blattwurzel
- 28: Blattspitze
- 30: große Flachseite
- 32: mehrfach gekrümmte Oberfläche
- 34a, 34b, 34c: Lage

- L: Längsrichtung
- R: Querrichtung

## Patentansprüche

1. Anordnung (2) pultrudierter Stäbe (4) aus einem faserverstärkten Material für einen Rotorblattgurt (6), wobei sich die pultrudierten Stäbe (4) in einer Längsrichtung (L) erstrecken und die pultrudierten Stäbe (4) der Anordnung (2) in einer Querrichtung (R), quer zu der Längsrichtung (L), nebeneinander angeordnet sind, **dadurch gekennzeichnet, dass** die Anordnung (2) zumindest ein aus einem Fasermaterial hergestelltes flexibles Haltemittel (10, 10a, 10b, 10c) umfasst, welches unmittelbar nebeneinander angeordnete Stäbe (4) derart miteinander verbindet, dass eine relative Verschiebung der benachbarten Stäbe (4) zueinander in Querrichtung (R) begrenzt ist, wobei das flexible Haltemittel (10, 10a, 10b, 10c) ferner derart eingerichtet ist, dass die unmittelbar benachbarten Stäbe (4) in Längsrichtung (L) gegeneinander abgleiten können.

2. Anordnung (2) nach Anspruch 1, **dadurch gekennzeichnet, dass** das Haltemittel (10, 10a, 10b, 10c) zumindest einen in Querrichtung (R) verlaufenden Faden (12a, 12b) oder zumindest ein in Querrichtung (R) verlaufendes Band umfasst, wobei der Faden (12a, 12b) oder das Band eine Vielzahl geschlossener Schlaufen ausbildet und wobei sich die Stäbe (4) in Längsrichtung (L) durch die Schlaufen hindurch erstrecken.

3. Anordnung (2) nach Anspruch 1 oder 2, **dadurch gekennzeichnet, dass** das Haltemittel (10, 10a, 10b, 10c) zumindest zwei in Querrichtung (R) verlaufende Fäden (12a, 12b) oder zumindest zwei in Querrichtung (R) verlaufende Bänder umfasst, wobei die beiden Fäden (12a, 12b) oder Bänder entgegengesetzt und abwechselnd nach der Art von Kettfäden auf einer ersten Flachseite (14a) und einer dieser gegenüberliegenden zweiten Flachseite (14b) der Stäbe (4) verlaufen und in einem Zwischenraum (16) zwischen den Stäben (4), der von einander zugewandten Flachseiten (20a, 20b) unmittelbar benachbarter Stäbe (4) begrenzt wird, Kreuzungspunkte (18) ausbilden.

4. Anordnung (2) nach einem der Ansprüche 1 bis 3, **dadurch gekennzeichnet, dass** das Haltemittel (10, 10a, 10b, 10c) eine Vielzahl länglicher Taschen (22a ... 22d) umfasst, welche sich in Längsrichtung (L) erstrecken und welche insbesondere an einander in Längsrichtung (L) entgegengesetzten Enden offen sind, wobei in Querrichtung (R) unmittelbar benachbarte Taschen (22a ... 22d) miteinander verbunden sind.

5. Anordnung (2) nach Anspruch 4, **dadurch gekennzeichnet, dass** die Taschen (22a ... 22d) entlang einer in Längsrichtung (L) zwischen den Stäben (4) verlaufenden Naht (24) miteinander verbunden sind.

6. Anordnung (2) nach einem der Ansprüche 1 bis 5, **dadurch gekennzeichnet, dass** das Haltemittel (10, 10a, 10b, 10c) aus einem gewebten und/oder geflochtenen Material hergestellt ist, welches insbesondere aus Kohlefaser und/oder Glasfaser hergestellt ist.

7. Rotorblattgurt (6) eines Rotorblatts (8) einer Windenergieanlage, wobei der Rotorblattgurt (6) zumindest eine Lage pultrudierter Stäbe (4) aus einem faserverstärken Material umfasst, **dadurch gekennzeichnet, dass** die Lage pultrudierter Stäbe (4) zumindest teilweise in einer Anordnung (2) nach einem der Ansprüche 1 bis 6 angeordnet ist.

8. Rotorblattgurt (6) nach Anspruch 7, **dadurch gekennzeichnet, dass** eine Flachseite, insbesondere eine große Flachseite (30), des Rotorblattgurtes (6) eine mehrfach gekrümmte Oberfläche (32) ist und die Stäbe (4) der Anordnung (2) in einer Ebene verlaufen, die dieser mehrfach gekrümmten Oberfläche (32) folgt.

9. Verfahren zum Herstellen eines Rotorblattgurtes (6) eines Rotorblatts (8) einer Windenergieanlage, **dadurch gekennzeichnet, dass** zumindest eine Lage pultrudierter Stäbe (4) in einer Anordnung (2) nach einem der Ansprüche 1 bis 6 in eine Laminierform zum Herstellen des Rotorblattgurtes (6) eingelegt wird und anschließend die pultrudierten Stäbe (4) miteinander verbunden, insbesondere vergossen, werden.

10. Verfahren nach Anspruch 9, **dadurch gekennzeichnet, dass** eine Innenkontur der Laminierform, welche dazu dient, eine Flachseite (30) des Rotorblattgurts (6) zu formen, eine mehrfach gekrümmte Oberfläche (32) ist, und die Anordnung (2) pultrudierter Stäbe (4) dieser Innenkontur folgend in die Laminierform eingelegt wird, so dass ein Rotorblattgurt (6) mit einer mehrfach gekrümmten Flachseite herstellbar ist und die Anordnung (2) pultrudierter Stäbe (4) in einer Ebene verläuft, welche der mehrfach gekrümmten Oberfläche (32) folgt.

## Claims

1. An arrangement (2) of pultruded rods (4) consisting of a fiber-reinforced material for a rotor blade belt (6), wherein the pultruded rods (4) extend in a longitudinal direction (L), and the pultruded rods (4) of the arrangement (2) are arranged adjacent to each other in a transverse direction (R) transverse to the longitudinal direction (L), **characterized in that** the arrangement (2) comprises at least one flexible holding means (10, 10a, 10b, 10c) produced from a fiber material that connects rods (4) which are arranged directly adjacent to each other such that a relative shift of the adjacent rods (4) in relation to each other in the transverse direction (R) is limited, wherein the flexible holding means (10, 10a, 10b, 10c) is moreover configured such that the directly adjacent rods (4) can slide against each other in longitudinal direction (L).

2. The arrangement (2) according to claim 1, **characterized in that** the holding means (10, 10a, 10b, 10c) comprise threads (12a, 12b) extending at least in a transverse direction (R), or at least a ribbon extending in a transverse direction (R), wherein the threads (12a, 12b) or the ribbon forms a plurality of closed loops, and wherein the rods (4) extend in longitudinal direction (L) through the loops.

3. The arrangement (2) according to claim 1 or 2, **characterized in that** the holding means (10, 10a, 10b, 10c) comprises at least two threads (12a, 12b) extending in a transverse direction (R), or two ribbons extending in a transverse direction (R), wherein the two threads (12a, 12b) or ribbons extend like warp threads in opposite directions and alternatingly on a first flat side (14a) and a second flat side (14b) of the rods (4) opposite thereto, and form intersections (18) in a gap (16) between the rods (4) that is bordered by facing flat sides (20a, 20b) of directly adjacent rods (4).

4. The arrangement (2) according to one of claims 1 to 3, **characterized in that** the holding means (10, 10a, 10b, 10c) comprise a plurality of the elongated pockets (22a ... 22d) that extend in longitudinal direction (L) and are open at ends that in particular are opposite each other in longitudinal direction (L), wherein pockets (22a ... 22d) that are directly adjacent to each other in a transverse direction (R) are connected to each other.

5. The arrangement (2) according to claim 4, **characterized in that** the pockets (22a ... 22d) are connected to each other along a seam (24) extending in longitudinal direction (L) between the rods (4).

6. The arrangement (2) according to one of claims 1 to 5, **characterized in that** the holding means (10, 10a, 10b, 10c) are produced from a woven and/or braided material that in particular is produced from carbon fibers and/or glass fibers.

7. A rotor blade belt (6) of a rotor blade (8) of a wind turbine, wherein the rotor blade belt (6) comprises at least one layer of pultruded rods (4) consisting of a fiber-reinforced material, **characterized in that** the layer of pultruded rods (4) is arranged at least partially in an arrangement (2) according to one of claims 1 to 6.

8. The rotor blade belt (6) according to claim 7, characterized that a flat side, in particular a large flat side (30), of the rotor blade belt (6) is a multiple curved surface (32), and the rods (4) of the arrangement (2) extend in a plane that follows this multiple curved surface (32).

9. A method for producing a rotor blade belt (6) of a rotor blade (8) of a wind turbine, **characterized in that** at least one layer of pultruded rods (4) is placed in an arrangement (2) according to one of claims 1 to 6 in a lamination mold to produce the rotor blade belt (6), and then the pultruded rods (4) are connected in particular cast to each other.

10. The method according to claim 9, characterized that an internal contour of the lamination mold which serves to form a flat side (30) of the rotor blade belt (6) is a multiple curved surface (32), and the arrangement (2) of pultruded rods (4) is placed in the lamination mold following this inner contour such that a rotor blade belt (6) is producible with a multiple curved flat side, and the arrangement (2) of pultruded rods (4) extends in a plane that follows the multiple curved surface (32).

## Revendications

1. Agencement (2) de tiges pultrudées (4) en un matériau renforcé par des fibres pour un longeron de pale de rotor (6), dans lequel les tiges pultrudées (4) dans une direction longitudinale (L) et les tiges pultrudées (4) de l'agencement (2) dans une direction transversale (R), transversalement à la direction longitudinale (L), sont disposées les unes à côté des autres, **caractérisé en ce que** l'agencement (2) comprend au moins un élément de maintien souple (10, 10a, 10b, 10c) constitué d'un matériau fibreux qui raccorde l'une à l'autre les tiges (4) immédiatement juxtaposées de telle sorte qu'un déplacement relatif des tiges (4) adjacentes les unes aux autres est limité dans la direction transversale (R), lesdits éléments de maintien souple (10, 10a, 10b, 10c) étant en outre adaptés de sorte que les tiges (4) immédiatement juxtaposées peuvent coulisser l'une contre l'autre dans la direction longitudinale (L).

2. Agencement (2) selon la revendication 1, **caractérisé en ce que** les moyens de maintien (10, 10a, 10b, 10c) comprennent au moins un fil (12a, 12b) s'étendant dans la direction transversale (R) ou au moins bande s'étendant dans la direction transversale (R), dans lequel le fil (12a, 12b) ou la bande forme une pluralité de boucles fermées et les tiges (4) s'étendent dans la direction longitudinale (L) et sont engagées au travers des boucles.

3. Agencement (2) selon la revendication 1 ou la revendication 2, **caractérisé en ce que** les moyens de maintien (10, 10a, 10b, 10c) comprennent au moins deux fils (12a, 12b) s'étendant dans la direction transversale (R) ou au moins deux bandes s'étendant dans la direction transversale (R), dans lequel les deux fils (12a, 12b) ou les bandes s'étendent alternativement et de manière opposée à la manière de fils de chaine sur un premier côté plat (14a) et un deuxième côté plat opposé (14b) des tiges (4), et, dans un espace intermédiaire (16), défini par les côtés plats (20a, 20b) se faisant face des tiges (4) immédiatement adjacentes, forment des points de croisement (18).

4. Agencement (2) selon l'une quelconque des revendications 1 à 3, **caractérisé en ce que** les moyens de maintien (10, 10a, 10b, 10c) comprennent une pluralité de poches allongées (22a ... 22d) s'étendant dans la direction longitudinale (L) et qui, en particulier, sont chacune ouvertes à leur extrémité opposée dans la direction longitudinale (L), les poches immédiatement voisines (22a ... 22d) étant reliées entre elles dans la direction transversale (R).

5. Agencement (2) selon la revendication 4, **caractérisé en ce que** les poches (22a ... 22d) qui s'étendent le long d'une direction longitudinale (L) sont reliées entre elles entre les tiges (4) par des coutures (24).

6. Agencement (2) selon l'une quelconque des revendications 1 à 5, **caractérisé en ce que** les moyens de maintien (10, 10a, 10b, 10c) sont fabriqués à partir d'un matériau tissé et / ou tressé qui est notamment réalisé en fibres de carbone et / ou en fibres de verre.

7. Longeron (6) de pale de rotor d'une pale de rotor (8) d'une éolienne, ledit longeron (6) de pale de rotor comprenant au moins une couche de tiges pultrudées (4) en un matériau renforcé par des fibres, **caractérisé en ce que** la couche de tiges pultrudées (4) est au moins partiellement disposée selon un agencement (2) selon l'une quelconque des revendications 1 à 6.

8. Longeron (6) de pale de rotor selon la revendication 7, **caractérisé en ce qu'**un côté plat, en particulier un grand côté plat (30) du longeron (6) de pale de rotor est une surface multi-incurvée (32) et **en ce que** les tiges (4) de l'agencement (2) s'étendent dans un plan qui suit cette surface multi-incurvée (32).

9. Procédé de fabrication d'un longeron (6) de pale de rotor d'une pale de rotor (8) d'une éolienne, **caractérisé en ce qu'**au moins une couche de tiges pultrudées (4) d'un agencement (2) selon l'une quelconque des revendications 1 à 6 est insérée dans un moule de stratification pour la fabrication du longeron de pale de rotor (6) et qu'ensuite les tiges pultrudées (4) sont reliées les unes aux autres, et en particulier raccordées.

10. Procédé selon la revendication 9, **caractérisé en ce qu'**un contour intérieur du moule de stratification, qui sert à former une face plane (30) du longeron (6) de pale de rotor, est une surface multi-incurvée (32), et l'agencement (2) des tiges pultrudées (4) est inséré dans le moule de stratification, de sorte qu'un longeron (6) de pale de rotor est réalisé avec un côté plat multi-incurvé et que l'agencement (2) des tiges pultrudées (4) s'étende dans un plan suivant la surface multi-incurvée (32).
